# EUROPEAN PATENT APPLICATION

(11) **EP 3 786 868 A1**
(43) Date of publication of application: **03.03.2021**
(21) Application number: 19792232.1
(22) Date of filing: 08.03.2019
(51) Int. Cl.: G06Q 20/06

(54) **PAYMENT METHOD AND SYSTEM FOR PLEDGE-PAYABLE ONLINE TRADING**

(30) Priority: 23.04.2018 CN 201810364041
(71) Applicant: Zhao, Shanke, Qingdao, Shandong 266000 (CN); Zhao, Chunyu, Qingdao, Shandong 266000 (CN)
(72) Inventor: Zhao, Shanke, Qingdao, Shandong 266000 (CN); Zhao, Chunyu, Qingdao, Shandong 266000 (CN)
(74) Representative: Perronace, Andrea
(86) International application number: PCT/CN2019/077568
(87) International publication number: WO 2019/205824

(57) **Abstract**

Provided are a payment method and system for pledge-payable online trading. The method includes the following steps: preparation of pledgeable payment, prompt of pledgeable payment, execution of pledgeable payment, and conditional redemption payment on due date. The system includes a seller member side electronic device (1), a seller member communication device (2), a seller member side pledge-payable system (3), a buyer member side electronic device (4), a buyer member communication device (5), a buyer member side pledge-payable system (6), a pledge-payable platform (7), and a pledge-payable platform side pledge-payable system (8), which are connected by means of interconnection networks such as the Internet. The invention endows a pledge-payable electronic currency with a pledge payment function and a two-way multilateral guarantee function. In this way, the invention overcomes the defect of one-way unilateral guarantee of electronic cash, eliminates the possibility of stealing electronic cash and consuming stolen electronic property, prolongs the time for withdrawing the stolen electronic property, and ensures the securing of online trading and payment.

## Description

### TECHNICAL FIELD

The present invention relates to the field of online trading payment, and in particular, to a payment method and system for pledge-payable online trading.

### BACKGROUND

With the continuous development of Internet economy, the security of online trading and online payment are attracting increasing attention from the public.

Electronic currency (electronic cash), as an online trading payment instrument, innately has the defects of one-way unilateral guarantee and immediate payment transfer, and the technology for preventing the crime of stealing electronic cash lags behind the crime technology of stealing electronic cash. The start time of the crime of stealing electronic cash is the end time of the crime, that is, the time when the stolen electronic cash is withdrawn or transferred or consumed. It may be said that it is impossible to defend effectively once the crime starts even if various defense measures are taken.

As a new online trading payment instrument, an electronic token is inherently controversial in its legality, and its sellers vary in reputation. There are many people who engage in illegal financing, illegal funding, financial fraud or pyramid sale in the name of electronic token selling, and the interests of the buyers cannot be guaranteed. Once the sellers encounter investment failure or run off with money, the buyers will lose their money. Although the technology for preventing the crime of stealing electronic cash lags behind the crime technology of stealing electronic cash, it can still be solved by technologies such as cutting off the path for stealing electronic cash, cutting off the path for consuming stolen electronic property, and prolonging the time for withdrawing the stolen electronic property, so as to reduce the crime rate of electronic property stealing, and gain time for avoiding the actual loss of electronic property. The defect of one-way unilateral guarantee of electronic cash and the controversy in the legality of electronic tokens seem to be "innate", but they are actually caused by lacking of legal technical means. Since it is a legal technical problem, it can naturally be solved by legal technical means.

Based on this, the inventor, under the guidance of "Internet+" and "Law+", has made theoretical and methodological innovation on the basis of the existing Internet technology and civil law theory, and has invented a pledge payment object which integrates advantages of collateral, equivalent and pledge, namely a pledge-payable electronic currency or pledge payment currency. The pledge payment object is not limited to an electronic form, and may also be a physical form. Meanwhile, a physical separation technology is used to cut off a physical connection between the pledge-payable electronic currency and the electronic cash, thus cutting off the path for stealing electronic cash. A pledge-payable continuous verification technology is used to cut off the path for consuming stolen electronic property. A pledge-payable periodic redeeming payment technology is used to prolong the time for withdrawing the stolen electronic property. A pledge-payable two-way multilateral guarantee agreement technology is used to solve defect of one-way unilateral guarantee of electronic cash and the controversy in legality of electronic token. On such basis, the invention discloses a payment method and system for pledge-payable online trading.

The invention has the following technical advantages: Firstly, the online payment is safe, legal and guaranteed, and the pledge-payable electronic currency is used as an online trading payment instrument, effectively solving the problems of electronic cash stealing and one-way unilateral guarantee defect. Meanwhile, the pledge-payable electronic currency as a pledge payment object is a special object of security rights, which has the interests of itself and its purchasers protected by law. Secondly, the online payment is convenient and quick: currency-only pledgeable payment for micropayment is as convenient as using small change, bill currency pledgeable payment for general payment is as quick as using a sight draft, and document/currency pledgeable payment for large payment is as normative as using a documentary credit. In addition, electronic cash payment is supported.

At present, no patent document related to the payment method and system for pledge-payable online trading has been retrieved.

### SUMMARY

A payment method and system for pledge-payable online trading are referred to as a pledge-payable method and system.

The pledge-payable, or pledgeable payment, is a new concept proposed by the present invention. The pledgeable payment is a novel online trading payment mode that uses pledge-payable electronic currency with a pledge payment function and a two-way multilateral guarantee function as a pledge payment object to pay for goods by pledge, and is also referred to as a pledge guaranteed payment or guaranteed payment. The online trading that uses pledge-payable electronic currency as a pledge payment object to pay for goods by pledge is referred to as a pledge-payable online trading or a pledge-payable trading.

Under the pledge-payable mode: a buyer member buys pledge-payable electronic currency from a pledge-payable electronic currency consignee for pledge payment, pays, under the redemption, authorization or permission of a pledge-payable platform, all or part of the payment for goods by pledge to a seller member through a pledge-payable system with all or part of the bought or/and collected pledge-payable electronic currency as a pledge payment object, and automatically entrusts a pledge-payable electronic currency redeemer or promises to make conditional redemption payment on due date to the seller member within a prescribed period; the seller member agrees the buyer member to use the pledge-payable electronic currency as a pledge payment object to pay for goods by pledge, and applies to the buyer member or the redeemer for the pledge-payable redemption payment on due date when the condition is satisfied; and the pledge-payable platform relies on the pledge-payable system to targeted sell pledge-payable electronic currency to a registered member, promises to make conditional redemption payment on due date within the prescribed period, and makes redemption payment on due date to the currency holding member when the condition is satisfied.

The condition refers to that the registered member uses the pledge-payable electronic currency for pledgeable payment, voluntarily abides by membership regulations and pledge-payable rules, and voluntarily accepts and actively pays the pledge-payable penalty imposed for any violations by the pledge-payable platform in accordance with the membership regulations and pledge-payable rules; if the registered member chooses or accepts a warrant for pledgeable payment, the condition further includes that the registered member gives a prompt of redemption or redemption payment to the redeemer, and the delivered pledge-payable warrant must be in accordance with the documents, where the redemption refers to a pledge-payable action that a pledge-payable electronic currency seller promises a currency buying member, or a pledge-payable electronic currency redeemer promises a currency holding member who delivers a pledge-payable warrant in accordance with the documents and prompts redemption, that they will conditionally make the consideration redemption payment to the currency holding member on the prescribed due date, and redeem pledge-payable electronic currency; and the redemption payment refers to a pledge-payable action that a pledge-payable electronic currency redeemer performs pledge-payable redemption payment verification on the pledge-payable income flow record or pledge-payable warrant delivered by a currency holding member for prompting the redemption payment, and after the verification is passed, pays the consideration redemption payment and redeems pledge-payable electronic currency on the prescribed due date.

The pledgeable payment redeemed by the redeemer is referred to as redemption pledgeable payment, which means that the pledge-payable electronic currency must be used together with a pledge-payable warrant that records the pledge-payable electronic currency after a redemption prompt is given and the pledge-payable electronic currency is redeemed by the redeemer, and conditional redemption payment is made on due date. The redemption pledgeable payment is also referred to as documentary pledgeable payment or document/currency pledgeable payment.

The pledgeable payment authorized by the redeemer is referred to as quick pledgeable payment, which means that the pledge-payable electronic currency, whether used alone or used together with the pledge-payable warrant, may be redeemed by the redeemer without a redemption prompt, and conditional redemption payment is made on due date. Such pledgeable payment is classified into note/currency pledgeable payment and currency-only pledgeable payment. The note/currency pledgeable payment means that the pledge-payable electronic currency must be used together with the pledge-payable warrant, and the pledge-payable vouchers attached to the pledge-payable warrant are limited to quick pledgeable payment of a pledge-payable right note, and such note/currency pledgeable payment is also referred to as note-following pledgeable payment; the currency-only pledgeable payment refers to quick pledgeable payment that the pledge-payable electronic currency is used alone; the document/currency pledgeable payment and the note/currency pledgeable payment are known collectively as warrant pledgeable payment; the redemption pledgeable payment in a broad sense includes the quick pledgeable payment, the redemption pledgeable payment in a narrow sense merely refers to the document/currency pledgeable payment, and the redemption pledgeable payment refers to the document/currency pledgeable payment unless otherwise stated; the quick pledgeable payment in a broad sense includes the currency-only pledgeable payment, the quick pledgeable payment in a narrow sense merely refers to the note/currency pledgeable payment, and the quick pledgeable payment refers to the note/currency pledgeable payment unless otherwise stated.

The pledgeable payment on the approval of the redeemer is referred to as self-redemption pledgeable payment, which means that the pledge-payable electronic currency must be used together with the pledge-payable warrant, the user promises to make conditional redemption payment on due date, and conditional redemption payment is made on due date.

In addition, the pledgeable payment conducted with the bought pledge-payable electronic currency as a pledge payment object is referred to as pledge payment, where the pledge payment conducted with the part of pledge-payable electronic currency bought a single time as a pledge payment object is referred to as partial pledge payment; the pledgeable payment conducted with the collected pledge-payable electronic currency as a pledge payment object is referred to as trans-pledge payment, where the trans-pledge payment conducted with the part of pledge-payable electronic currency collected a single time as a pledge payment object is referred to as partial trans-pledge payment; the pledgeable payment in a broad sense includes trans-pledge payment, and the pledgeable payment in a narrow sense merely refers to pledge payment.

The pledge-payable electronic currency, also known as pledge-payable currency or pledge currency, is a digital product that a pledge-payable platform provider targeted sells through the pledge-payable platform for pledge payment to a registered member who provides a pledge-payable trading guarantee or counter guarantee by taking the actual deposit fee as a guarantee fee, and promises to provide a pledge-payable trading counter guarantee or guarantee by taking the actually charged fee as a guarantee fee and make conditional redemption payment on due date. The pledge-payable electronic currency is a pledge payment object in an electronic form, abbreviated as a pledge payment object. It mainly has the following characteristics: 1, pledge payment, different from a collateral without a payment function; 2, two-way multilateral guarantee, different from an equivalent (electronic cash) with a one-way unilateral guarantee function; 3, diversity of a pledge-payable subject and uniqueness of a redemption payment subject, different from a pledge with uniqueness of a receiving subject and diversity of a redemption subject; and 4, Internet+, law+, different from the traditional electronic currency with high controversy in legality (electronic token).

The pledge-payable electronic currency used for the currency-only pledgeable payment is referred to as clean currency; the pledge-payable electronic currency used for the documentary pledgeable payment is referred to as documentary currency or document currency; the pledge-payable electronic currency used for the note-following pledgeable payment is referred to as note-following currency or note currency; the document currency and the note currency are known collectively as warrant currency; the pledge-payable electronic currency that has been applied for the issuance of a pledge-payable right note by the registered member and has not been used for pledge-payable trading is referred to as right note currency; the warrant currency and the right note currency are known collectively as registered currency or named currency, and can be reported for loss; the clean currency is unregistered currency or unnamed currency, and cannot be reported for loss; the report for loss is pledge-payable report for loss, or the report for loss of pledge-payable electronic currency, and is an action that the registered member submits, after discovering that the bought or collected named currency is stolen, a flow record and a flowed-to member list of the stolen pledge-payable electronic currency to the pledge-payable platform, declares the loss of the pledge-payable electronic currency, and requests to declare the invalid acquisition of the stolen pledge-payable electronic currency and withdraw the stolen electronic currency; and the stolen pledge-payable electronic currency can be referred to as loss reported pledge-payable electronic currency or loss reported currency.

The registered member who conducts pledgeable payment needs to buy pledge-payable electronic currency from the pledge-payable electronic currency consignee, and may apply for the issuance of a pledge-payable right note recording the pledge-payable electronic currency; the pledge-payable right note, that is, pledge-payable electronic right note or pledge payment right note or pledge payment note, is issued by the pledge-payable electronic currency consignee relying on the pledge-payable system for pledge payment, is a pledge-payable document of title that takes the currency purchasing member as an obligee, records the pledge-payable electronic currency and a commitment that conditional redemption payment can be made on due date, and is also a pledge-payable counter guarantee slip or a pledge-payable guarantee slip that the pledge-payable platform provides a pledge-payable trading counter guarantee or guarantee to the currency purchasing member with the actually charged fee equivalent to the sold pledge-payable electronic currency as a security deposit.

According to the allowed chargeable business scope of the pledge-payable platform provider, the actual fee charged by the pledge-payable electronic currency consignee is not limited to the security deposit, and further includes but is not limited to insurance fee, deposit fee, debt subscription fee, held debt subscription fee, share subscription fee, held share subscription fee, fund share subscription fee, accounts receivable fee, deposit, prepayment or payment for goods, etc.; correspondingly, the pledge-payable right note may also be a pledge-payable insurance policy, a pledge-payable deposit slip, a pledge-payable draft, a pledge-payable promissory note, a pledge-payable check or a pledge-payable letter of credit, a pledge-payable debenture, a pledge-payable held debenture, a pledge-payable stock certificate or pledge-payable stocks, a pledge-payable held stock certificate or pledge-payable held stocks, a pledge-payable fund share warrant, a pledge-payable accounts receivable warrant, a pledge-payable order, a pledge-payable warehouse warrant or a pledge-payable bill of lading, or the like.

When making pledgeable payment, the registered member needs to deliver pledge-payable electronic currency equivalent to the payment for goods to the seller member, and can issue a pledge-payable warrant recording the pledge-payable electronic currency. The pledge-payable warrant, also known as pledge-payable electronic warrant, pledge payment warrant or pledge payment certificate, is a pledge-payable document of title which is issued by the buyer member relying on the pledge-payable system, with all or part of the bought or acquired pledge-payable electronic currency as a pledge payment object, takes the seller member as a pledge-payable obligee, and records pledge-payable electronic currency equivalent to all or part of the payment for goods, a pledge-payable voucher for redemption payment and an entrust and a commitment to conditional redemption payment on due date; the pledge-payable document includes the pledge-payable voucher for verifying a real pledge-payable trading relationship, a pledge-payable bill for verifying an equivalent pledge-payable relationship, etc.; the pledge-payable voucher refers to a pledge-payable order, pledge-payable dispatch bill, pledge-payable waybill, pledge-payable guarantee slip or pledge-payable bill of lading recorded on a pledge-payable warrant, a certificate related to pledge-payable trading, etc.; the pledge-payable bill is a common term of a pledge-payable right note (including pledge-payable sub right notes) and a pledge-payable warrant

(including pledge-payable sub-warrants); the pledge-payable document is merely limited to the pledge-payable warrant of the pledge-payable right note, and is referred to as a note-following pledge-payable warrant or a note/currency pledge-payable warrant; the pledge-payable document is not limited to the pledge-payable warrant of the pledge-payable right note, and is collectively referred to as a documentary pledge-payable warrant or a document/currency pledge-payable warrant; the document/currency pledge-payable warrant is a redemption pledge-payable warrant, and the note/currency pledge-payable warrant is a quick pledge-payable warrant.

The pledge-payable method includes the steps of preparation of pledgeable payment, prompt of pledgeable payment, execution of pledgeable payment, conditional redemption payment on due date, etc. The specific steps are as follows.

### Step 1: Preparation of pledgeable payment

101. Open a pledge-payable account in a database of a pledge-payable platform, and bind the pledge-payable account to a member side electronic device and a member communication device.

The pledge-payable platform belongs to a pledge-payable platform provider; the pledge-payable platform provider is an owner, an operator and a maintainer of the pledge-payable platform; the pledge-payable account is opened for a registered member by the pledge-payable platform through a pledge-payable system, is used to receive, pay and deposit pledge-payable electronic currency, and has the following main characteristics: 1, the pledge-payable account depends on the pledge-payable system and has no physical connection with a bank payment system; 2, the pledge-payable account is used to receive, pay and deposit pledge-payable electronic currency, and has no physical connection with electronic cash; and 3, the pledge-payable account is forbidden to directly bind a bank account.

Before opening the pledge-payable account, the member needs to download and install a member side pledge-payable system, completes member real-name registration and authentication, and opens corresponding member permission as needed; a seller member needs to further complete store real-name authentication and goods quality authentication, and a charity sale member needs to further complete the filing of charity sale articles.

102. After the pledge-payable account is opened, apply to a pledge-payable electronic currency consignee for purchasing pledge-payable electronic currency, deposit fee, and exchange, by the pledge-payable electronic currency consignee, the fee actually deposited by the registered member, i.e., actually charged fee, into a certain type and amount of pledge-payable electronic currency, which is in turn deposited in the pledge-payable account of the currency purchasing member for topping up the pledge-payable account.

When the registered member buys the pledge-payable electronic currency for the first time, a pledge-payable two-way multilateral guarantee agreement sub-module is triggered, a pledge-payable two-way multilateral guarantee agreement signing procedure is initiated, and a pledge-payable two-way multilateral guarantee agreement is signed. By signing the pledge-payable two-way multilateral guarantee agreement, the currency purchasing member will provide a pledge-payable trading guarantee or counter guarantee to the pledge-payable platform with the actual deposit fee equivalent to the bought pledge-payable electronic currency as a security deposit since the buying of the pledge-payable electronic currency or since the signing for the pledge-payable right note, and also obtain a pledge-payable trading counter guarantee or guarantee provided by the pledge-payable platform since redemption with the actually charged fee equivalent to the pledge-payable electronic currency as a security deposit.

The fee actually charged by the pledge-payable platform is both the selling price of pledge-payable electronic currency and the security deposit of pledge-payable trading, and therefore has duality.

The pledge-payable electronic currency is based on the principle of "who buys it, who uses it", and "who uses it, who is responsible for it"; before the redemption payment of the redeemer, the currency purchasing member has the obligation to guarantee redemption and guarantee redemption payment for the used pledge-payable electronic currency and the bought pledge-payable electronic currency under the agreement of trans-pledge payment or negotiable redemption payment.

The currency purchasing member can apply to the pledge-payable electronic currency consignee for the issuance of a pledge-payable right note recording the pledge-payable electronic currency; if the registered member has not applied for the issuance of a pledge-payable right note, the pledge-payable inflow record obtained by the registered member for purchasing the pledge-payable electronic currency has the same effect as the pledge-payable right note recording the pledge-payable electronic currency.

103. The seller member prices goods in pledge-payable electronic currency; and the buyer member selects the goods if a trading mode of payment before delivery is chosen, or signs for the goods if a trading mode of payment on delivery is chosen.

### Step 2: Prompt of pledgeable payment

201. The buyer member issues a pledge-payable command to the pledge-payable platform, to prompt pledgeable payment.

If the buyer member chooses redemption pledgeable payment, when a prompt for pledgeable payment is given, a pledge-payable warrant recording the pledge-payable electronic currency is issued and delivered to the pledge-payable electronic currency redeemer to prompt redemption.

The pledge-payable electronic currency is based on the principle of "who sells it, who undertakes redemption", and "who undertakes redemption, who redeems it", with the exception of buyer member's own undertaking and redemption. A pledge-payable electronic currency seller is the pledge-payable electronic currency redeemer, and is also a redemption payer of the pledge-payable electronic currency.

202. The pledge-payable platform verifies the prompt of pledgeable payment after receiving the pledge-payable command, that is, verifies the pledge-payable ability and pledge-payable permission of the buyer member, and retrieves the pledge-payable electronic currency of the buyer member, or/and whether the pledge-payable credit limit is sufficient, and whether the pledge-payable permission of the buyer member is sufficient, where if the pledge-payable electronic currency of the buyer member is insufficient and the pledge-payable credit limit is insufficient, or if the pledge-payable permission of the buyer member is insufficient, the verification is not passed, the execution is rejected and the reason is reported; otherwise, the verification is passed; if the buyer member submits the pledge-payable warrant to prompt redemption, the pledge-payable verification is prompted; and the pledge-payable verification further includes pledge-payable warrant verification, that is, the redeemer (7) verifies the received pledge-payable warrant after the pledge-payable ability and pledge-payable permission are approved.

After the verification is passed, a pledge-payable redemption record number, and/or a pledge-payable command record number, and a temporary password and a validity period used to execute pledgeable payment, are fed back to a primary communication device (51/21) and a standby communication device (52/22) of the buyer member; if the buyer member submits the pledge-payable warrant to prompt redemption, after the verification is passed, the redeemer further needs to undertake the redemption within a time limit, and return the pledge-payable warrant recording "redemption" to the buyer member.

### Step 3: Execution of pledgeable payment

301. The buyer member issues a command of executing pledgeable payment to the pledge-payable platform, and pays pledge-payable electronic currency to a designated pledge-payable account of the seller member for pledge-payable consumption, payment, donation or transfer.

The buyer member choosing warrant pledgeable payment further needs to deliver the pledge-payable warrant to the seller member, where the buyer member choosing quick pledgeable payment needs to issue and deliver the pledge-payable warrant to the seller member, and the buyer member choosing redemption pledgeable payment needs to deliver a redemption pledge-payable warrant to the seller member.

302. The pledge-payable platform executes the pledgeable payment verification after receiving the command of executing pledgeable payment, and retrieves whether the pledge-payable account of the buyer member has a pledge-payable redemption record corresponding to the pledge-payable electronic currency, and/or a pledge-payable command record.

After the verification is passed, the pledge-payable electronic currency is transferred to the pledge-payable account of the seller member according to the retrieved corresponding pledge-payable redemption record and/or pledge-payable command record, where for the seller member who accepts quick pledgeable payment (including currency-only pledgeable payment), the pledge-payable electronic currency is transferred to the pledge-payable account of the seller member according to the retrieved corresponding pledge-payable command record; for the seller member who accepts redemption pledgeable payment, the pledge-payable electronic currency is transferred to the pledge-payable account of the seller member according to the retrieved corresponding pledge-payable redemption record and pledge-payable command record.

303. The seller member collects the pledge-payable electronic currency, where when the seller member collects the pledge-payable electronic currency, a pledge-payable periodic redemption payment sub-module is triggered, and a pledge-payable periodic redemption payment procedure is initiated, and since the collection of the pledge-payable electronic currency by the seller member, a seller member side electronic device, a buyer member side electronic device and the pledge-payable platform synchronously start pledge-payable periodic redemption payment countdown.

If the seller member accepts the warrant pledgeable payment, the seller member verifies the received pledge-payable warrant after collecting the pledge-payable electronic currency, signs for the pledge-payable warrant after the pledge-payable warrant verification is passed, and feeds back a pledge-payable warrant signing record number to the buyer member; and when the seller member signs for the pledge-payable warrant, the pledge-payable periodic redemption payment sub-module is triggered, and the pledge-payable periodic redemption payment countdown is synchronously started since the signing for the pledge-payable warrant by the seller member.

When the seller member collects the pledge-payable electronic currency for the first time, a pledge-payable two-way multilateral guarantee agreement sub-module is triggered, a pledge-payable two-way multilateral guarantee agreement signing procedure is initiated, and a pledge-payable two-way multilateral guarantee agreement is signed. By signing the pledge-payable two-way multilateral guarantee agreement, the seller member (currency collecting member) provides a pledge-payable trading guarantee or counter guarantee to the pledge-payable platform with the actual goods payment equivalent to the collected pledge-payable electronic currency as a security deposit since the collecting of the bought or collected pledge-payable electronic currency delivered by the buyer member or since the singing for the pledge-payable warrant delivered by the buyer member, and also obtains a pledge-payable trading counter guarantee or guarantee provided by the pledge-payable platform since the redemption with the actually charged fee equivalent to the pledge-payable electronic currency as a security deposit; that is, the seller member confirms that since the collecting of the bought or collected pledge-payable electronic currency delivered by the buyer member or since the singing for the pledge-payable warrant delivered by the buyer member, the rights and obligations of pledge-payable trading guarantee or counter guarantee set based on the pledge-payable electronic currency and set for the buyer member are transferred to the seller member (currency collecting member) together.

Before the redemption payment of the redeemer, the seller member has the obligation to guarantee redemption and guarantee redemption payment for the used pledge-payable electronic currency and the collected pledge-payable electronic currency under the agreement of trans-pledge payment or negotiable redemption payment.

### Step 4: Conditional redemption payment on due date

401. The seller member submits a pledge-payable inflow record and the like to the redeemer to prompt redemption payment after the periodic redemption payment countdown is over.

If the seller member accepts the warrant pledgeable payment, the seller member submits a pledge-payable warrant and the like to the redeemer after the periodic redemption payment countdown is over and within the delivery period of the pledge-payable warrant so as to prompt redemption payment; the seller member performs pledge-payable self-discipline identification after the periodic redemption payment countdown starts and before redemption payment is prompted, and submits, upon the prompt of redemption payment, a pledge-payable self-discipline certificate issued by the pledge-payable platform, where the pledge-payable self-discipline identification indicates that the pledge-payable platform issues, according to the application of the registered member, to the registered member an opinion that the registered member has no behavior of violating the membership regulations and pledge-payable rules within a specific period, or that the pledge-payable penalties of the registered member within a specific period have all been paid.

402. After receiving the prompt for redemption payment, the redeemer verifies the pledge-payable redemption payment, and checks whether the pledge-payable account of the seller member has a pledge-payable command record corresponding to the pledge-payable electronic currency; and if the verification is passed, the redeemer deducts, according to the corresponding pledge-payable command record retrieved from the pledge-payable account of the seller member, equivalent pledge-payable electronic currency from the pledge-payable account of the seller member through the pledge-payable system on the due date, and then pays equivalent redemption payment to a bank account of the seller member through a bank payment system to complete the pledge-payable redemption payment.

If the seller member submits the pledge-payable warrant to prompt redemption payment, the pledge-payable redemption payment is verified; the verification further includes pledge-payable warrant verification, and the pledge-payable redemption payment verification result should be confirmed by both members; after the verification is passed, redemption payment is made on due date according to the pledge-payable redemption payment verification result confirmed by both members, the corresponding pledge-payable redemption record retrieved from the pledge-payable account of the seller member, and/or the pledge-payable warrant signing record, and the pledge-payable command record.

The pledge-payable warrant verification includes pledge-payable continuous verification and pledge-payable complying presentation verification. When the seller member or the redeemer receives the pledge-payable warrant, a pledge-payable continuous verification sub-module is triggered, a pledge-payable continuous verification procedure is initiated, and the continuity and/or authenticity of electronic signatures of the pledge-payable warrant and the attached pledge-payable note are verified through the system; if the pledge-payable electronic signatures are untrue or discontinuous, the verification is not passed, and the system directly refuses to receive the pledge-payable warrant, or directly refuses to redeem or refuses redemption payment; if the pledge-payable electronic signatures are continuous and/or true, the verification is passed, and the system prompts the seller member or the redeemer to perform pledge-payable complying presentation verification.

The seller member or the redeemer performs the pledge-payable complying presentation verification according to the prompt of the system; if the presented documents are found to be discrepant, the discrepancies are notified at one time within a time limit and corrections within the time limit are required; if the discrepancies are not corrected within the time limit, the verification is not passed, the seller member refuses to accept the pledge-payable warrant, and the redeemer refuses to redeem or refuses redemption payment; if the presented documents are correct, the verification is passed.

The continuity of pledgeable payment, i.e., the continuity of pledge-payable electronic signatures, refers to that the electronic signatures of a pledge payment person, a pledge payment right person (trans-pledge payment person) and a trans-pledge payment right person between the pledge-payable warrant and the attached pledge-payable note are successively connected; the pledge-payable complying presentation refers to superficial complying presentation between all the pledge-payable vouchers stipulated in the pledge-payable warrant and between all the pledge-payable vouchers and the pledge-payable warrant.

The man-machine separation of the pledge-payable continuous verification and the pledge-payable complying presentation verification can effectively prevent from creating opportunities for malicious programs such as network Trojan or network hackers due to excessive reliance on system verification, and power corruption and human resource waste due to excessive reliance on human verification.

403. After the seller member receives the redemption payment, pledgeable payment ends; once the pledge-payable electronic currency is redeemed, various pledge-payable rights and obligations set based on the pledge-payable electronic currency between the pledge-payable platform and the currency purchasing member, between the currency purchasing member (buyer member) and the currency collecting member (seller member), between the currency collecting member and the pledge-payable platform and between each other are terminated.

The pledge-payable system includes: a seller member side electronic device, a seller member communication device, a seller member side pledge-payable system, a buyer member side electronic device, a buyer member communication device, a buyer member side pledge-payable system, a pledge-payable platform, and a pledge-payable platform side pledge-payable system, which are connected by interconnection networks, such as the Internet; the seller member side electronic device and the buyer member side electronic device are collectively referred to as member side electronic devices, the seller member communication device and the buyer member communication device are collectively referred to as member communication devices, and the seller member side pledge-payable system and the buyer member side pledge-payable system are collectively referred to as member side pledge-payable systems.

The member side electronic device is installed with the member side pledge-payable system, and the member side pledge-payable system includes: a member management module, configured to carry out the real-name registration and authentication of members, open member permissions, and maintain and verify member identification information; a pledge-payable management module, configured to open a pledge-payable account, deposit, receive and pay pledge-payable electronic currency, verify the pledge-payable electronic currency and member's pledge-payable identification information, and record pledge-payable account flow information, and further configured to cut off the path for stealing electronic cash; a store management module/charity store management module, configured for a seller member to carry out real-name authentication of a store, authenticate the quality of goods, file charity sale articles, manage and maintain the store and goods, and accept or place a pledge-payable order or a pledge-payable charity sale order, or for a buyer member to file charity sale articles, manage and maintain the charity sale articles, place a pledge-payable order, and accept or place a pledge-payable charity sale order.

The member communication device includes: a primary communication device and a standby communication device, and is configured to communicate with the pledge-payable platform for member identification information verification, and the standby communication device is further configured to receive information change reminders and confirm change information when the member registration information or the information bound to the pledge-payable account changes.

The pledge-payable platform is installed with the pledge-payable platform side pledge-payable system, and the pledge-payable platform side pledge-payable system includes: a member management module, configured to carry out the real-name registration and authentication of members, open member permissions, maintain member information, provide verification, supervision and service, and save and verify member identification information; a pledge-payable management module, configured to issue, sell, clear, settle and redeem pledge-payable electronic currency, save and verify the pledge-payable electronic currency and member's pledge-payable identification information, and record pledge-payable account flow information, and further configured to cut off the path for stealing electronic cash; and a store management module (charity shop management module), configured to carry out real-name authentication of a store, authenticate the quality of goods, file charity sale articles, manage and maintain the store and goods, provide verification, supervision and service for the pledge-payable order or pledge-payable charity sale order, and save and update the store and goods information.

The pledge-payable management module further includes: a pledge-payable two-way multilateral guarantee agreement sub-module, configured to initiate a pledge-payable two-way multilateral guarantee agreement signing procedure for signing a pledge-payable two-way multilateral guarantee agreement; a pledge-payable continuous verification sub-module, configured to initiate a pledge-payable electronic signature verification procedure for verifying the continuity and/or authenticity of a pledge-payable electronic signature, and further configured to cut off the path for consuming stolen electronic property; and a pledge-payable periodic redemption payment sub-module, configured to initiate a pledge-payable periodic redemption payment procedure, and simultaneously start pledge-payable redemption payment countdown, and further configured to prolong the time for withdrawing the stolen electronic property.

The pledgeable payment is a pledge-payable trading service, and the pledge-payable system supports the pledge-payable trading.

### BRIEF DESCRIPTION OF THE DRAWINGS

Descriptions of well-known functions and structural parts, as well as parts that can refer to each other and complement each other, are omitted from the following drawings and descriptions.
FIG. 1 is a schematic diagram of a payment system for pledge-payable online trading according to an embodiment of the present invention.
FIG. 2 is a schematic flowchart of a payment method for pledge-payable online trading according to an embodiment of the present invention.**DETAILED DESCRIPTION**

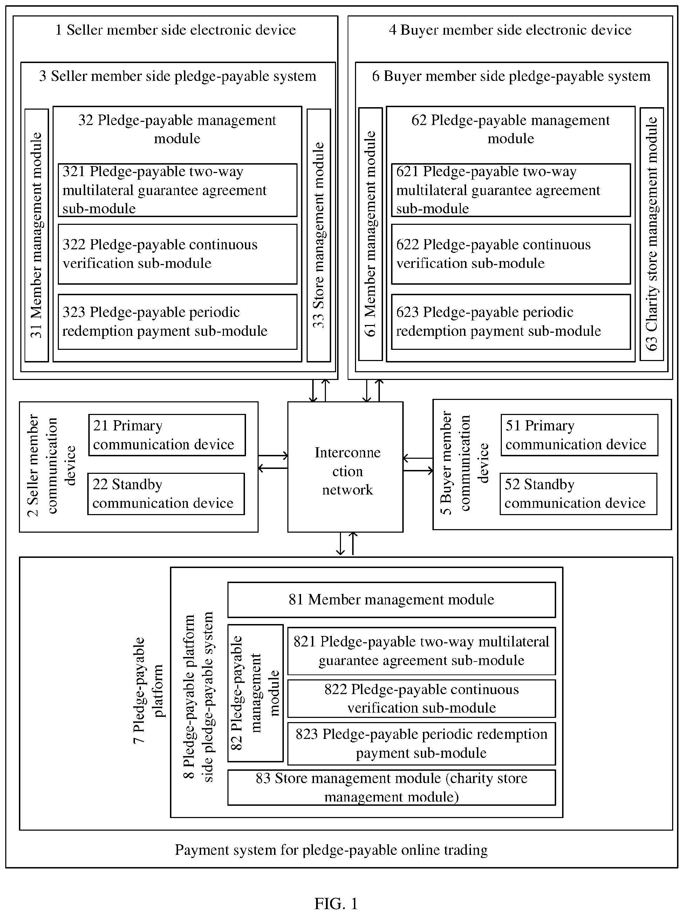

Referring to FIG. 1, a payment system for pledge-payable online trading includes: a seller member side electronic device (1), a seller member communication device (2), a seller member side pledge-payable system (3), a buyer member side electronic device (4), a buyer member communication device (5), a buyer member side pledge-payable system (6), a pledge-payable platform (7), and a pledge-payable platform side pledge-payable system (8), which are connected by means of interconnection networks, such as the Internet.

The member side electronic device (1/4) is installed with the member side pledge-payable system (3/6), and the member side pledge-payable system (3/6) includes: a member management module (31/61), configured to carry out real-name registration and authentication of members, open member permissions, and maintain and verify member identification information; a pledge-payable management module (32/62), configured to open a pledge-payable account, deposit, receive and pay pledge-payable electronic currency, verify the pledge-payable electronic currency and member's pledge-payable identification information, and record pledge-payable account flow information, and further configured to cut off the path for stealing electronic cash; a store management module (33)/charity store management module (63), configured for a seller member to carry out real-name authentication of a store, authenticate the quality of goods, file charity sale articles, manage and maintain the store and goods, and accept or place a pledge-payable order or a pledge-payable charity sale order, or for a buyer member to file charity sale articles, manage and maintain the charity sale articles, place a pledge-payable order, and accept or place a pledge-payable charity sale order.

The member communication device (2/5) includes: a primary communication device (21/51) and a standby communication device (22/52), and is configured to communicate with the pledge-payable platform for member identification information verification, and the standby communication device is further configured to receive information change reminders and confirm change information when the member registration information or the information bound to the pledge-payable account changes.

The pledge-payable platform (7) is installed with the pledge-payable platform side pledge-payable system (8), and the pledge-payable platform side pledge-payable system (8) includes: a member management module (81), configured to carry out real-name registration and authentication of members, open member permissions, maintain member information, provide check, supervision and service, and save and verify member identification information; a pledge-payable management module (82), configured to issue, sell, clear, settle and redeem pledge-payable electronic currency, save and verify the pledge-payable electronic currency and member's pledge-payable identification information, and record pledge-payable account flow information, and further configured to cut off the path for stealing electronic cash; and a store management module (charity store management module) (83), configured to carry out real-name authentication of a store, authenticate the quality of goods, file charity sale articles, manage and maintain the store and goods, provide verification, supervision and service for the pledge-payable order or pledge-payable charity sale order, and save and update the store and goods information.

The pledge-payable management module (32/62/82) further includes: a pledge-payable two-way multilateral guarantee agreement sub-module (321/621/821), configured to enable a pledge-payable two-way multilateral guarantee agreement signing procedure for signing a pledge-payable two-way multilateral guarantee agreement; a pledge-payable continuous verification sub-module (322/622/822), configured to enable a pledge-payable electronic signature verification procedure for checking the continuity and/or authenticity of a pledge-payable electronic signature, and further configured to cut off the path for consuming stolen electronic property; and a pledge-payable periodic redemption payment sub-module (323/623/823), configured to enable a pledge-payable periodic redemption payment procedure, and simultaneously enable pledge-payable redemption payment countdown, and further configured to prolong the time for withdrawing the stolen electronic property.

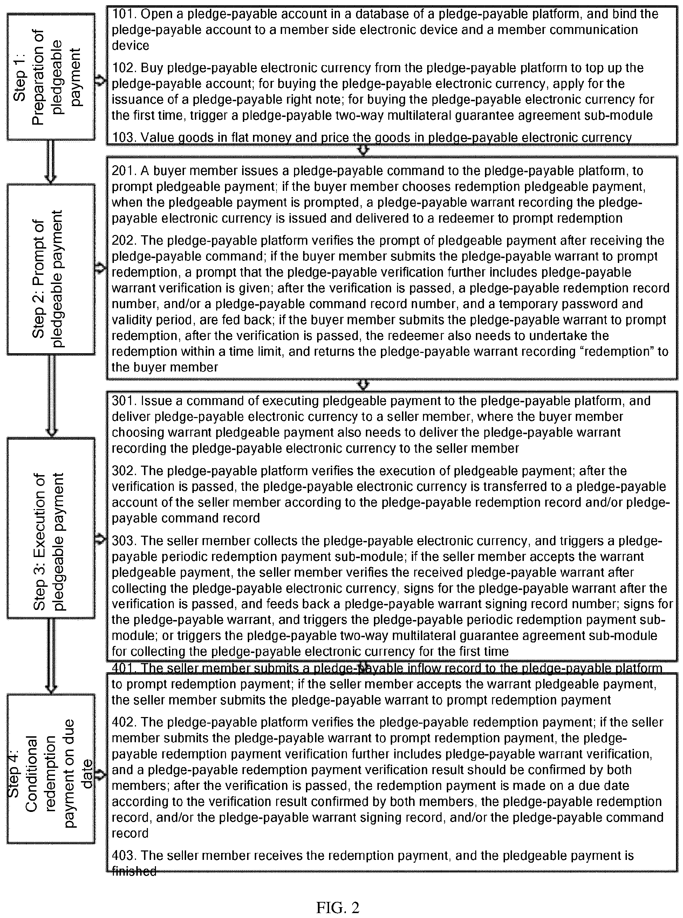

Referring to FIG. 2, a payment method for pledge-payable online trading includes the steps such as preparation of pledgeable payment, prompt of pledgeable payment, execution of pledgeable payment, conditional redemption payment on due date. The specific steps are as follows.

### Step 1: Preparation of pledgeable payment

101. Open a pledge-payable account in a database of the pledge-payable platform (7), and bind the account to a member side electronic device (1/4) and a member communication device (2/5), to establish a corresponding relationship between the pledge-payable account and the member side electronic device (1/4) and the member communication device (2/5).

A pledge-payable system prohibits direct binding of the pledge-payable account with a bank account; if the system-retrieved device or information bound to the pledge-payable account includes bank account information, then the member communication device (2/5) prompts a risk, and prompts the member to use the standby communication device (22/52) to confirm the binding information if the member wants to continue binding.

The pledge-payable platform (7) implements a real-name registration and authentication system for members; before opening the pledge-payable account, the member needs to use the member side electronic device (1/4) to access the pledge-payable platform or a member side pledge-payable system download side authorized or permitted by a pledge-payable platform provider, download and install the member side pledge-payable system (3/6) to complete member's real-name registration and authentication (including electronic signature authentication), and open the corresponding member permissions as needed; the seller member needs to further complete store's real-name authentication and goods quality authentication, and the charity sale member needs to further complete the filing of charity sale articles; the registered members include buyer members and seller members; the buyer members include seller members who buy goods, and the seller members include buyer members who sell charity sale articles; for the convenience of description, the registered members are sometimes referred to as currency purchasing members, currency collecting members, currency holding members, charity sale members, loss report members, flowed-to members, redeeming members, warrant members, document/currency members, note/currency members, currency-only members, etc.; the goods include services and charity sale articles, and correspondingly, the payment for goods includes service fee and charity sale payment; the member permissions include redemption pledgeable payment, quick pledgeable payment, currency-only pledgeable payment, self-redemption pledgeable payment, trans-pledge payment, redemption payment, negotiable redemption payment, electronic cash payment, etc.; the member side electronic device includes but is not limited to a member-owned electronic device, a member side self-service electronic device provided or approved by a pledge-payable platform provider, a member side public electronic device approved by the pledge-payable platform provider, etc.

A member can also obtain the member side pledge-payable system by purchasing an electronic device product pre-installed with the member side pledge-payable system authorized or licensed by the pledge-payable platform provider, etc.

102. After opening the pledge-payable account, the member uses the member side electronic device (1/4) to log in to the pledge-payable management module (32/62) of the member side pledge-payable system (3/6), applies to a pledge-payable electronic currency consignee (7) for buying pledge-payable electronic currency, such as Baitaotongbao coins, where the seller member can apply for buying Baitaotongbao gold coins and the buyer member can apply for buying Baitaotongbao silver coins, and deposits the fee equivalent to the bought pledge-payable electronic currency to a bank account designated by a pledge-payable electronic currency consignee of a bank payment system; the pledge-payable electronic currency consignee (7) exchanges the actual deposit fee of the registered member, i.e., actually charged fee, into a certain type and amount of pledge-payable electronic currency according to a certain exchange rate of flat money to pledge-payable electronic currency, for example, according to a certain exchange rate of RMB to pledge-payable electronic currency, and deposits the pledge-payable electronic currency into the pledge-payable account of the currency purchasing member for topping up the pledge-payable account; or, the member can directly deposit the fee to the bank account of the pledge-payable platform provider through the bank payment system to buy pledge-payable electronic currency, and then log in to the pledge-payable management module (32/62) of the member side pledge-payable system (3/6) by using the member side electronic device (1/4) to access the pledge-payable account for topping up the pledge-payable account; the registered member can further buy pledge-payable electronic currency by registering for a pledge-payable membership card or a credit card, or buying a pledge-payable shopping card or a top-up card, etc., for topping up the pledge-payable account, to ensure that the pledge-payable account has sufficient pledge-payable electronic currency.

The pledge-payable platform provider is also an issuer, a redeemer and a payment redeemer of the pledge-payable electronic currency; the pledge-payable platform provider targeted sells the pledge-payable electronic currency to the registered member through the pledge-payable platform, promises to make conditional redemption payment on due date for the currency holding member within the prescribed period, and make redemption payment on the due date when the condition is satisfied; for ease of expression, the pledge-payable platform is sometimes called a pledge-payable electronic currency seller, a redemption undertaker and a payment redeemer or a redeemer; the pledge-payable platform provider may also authorize or permit relevant professional sales agencies to sell pledge-payable electronic currency, and be responsible for conditional redemption payment within the prescribed period.

When the registered member buys the pledge-payable electronic currency for the first time, the pledge-payable two-way multilateral guarantee agreement sub-module (321/621/821) is triggered, the pledge-payable two-way multilateral guarantee agreement signing procedure is initiated, and a pledge-payable two-way multilateral guarantee agreement is signed; by signing the pledge-payable two-way multilateral guarantee agreement, the currency purchasing member will provide a pledge-payable trading guarantee or counter guarantee to the pledge-payable platform with the actual deposit fee equivalent to the bought pledge-payable electronic currency as a security deposit since the buying of the pledge-payable electronic currency or since the signing for the pledge-payable right note, and simultaneously obtain a pledge-payable trading counter guarantee or guarantee provided by the pledge-payable platform since the redemption with the actually charged fee equivalent to the pledge-payable electronic currency as a security deposit; if the currency purchasing member signs the agreement, the system approves the purchase of pledge-payable electronic currency; and if the currency purchasing member does not sign the agreement, the system refuses the purchase of pledge-payable electronic currency.

The member directly deposits the fee to the bank account of the pledge-payable platform provider through the bank payment system, to buy pledge-payable electronic currency, which is deemed to accept the pledge-payable two-way multilateral guarantee agreement, and the member signs the pledge-payable two-way multilateral guarantee agreement when accessing the pledge-payable platform to top up the pledge-payable electronic currency for the first time.

If the currency purchasing member has signed the pledge-payable two-way multilateral guarantee agreement at registration, when the currency purchasing member buys pledge-payable electronic currency for the first time, the system automatically identifies and approves the purchase of pledge-payable electronic currency.

Real-name registration and authentication of a member, real-name authentication of a store, goods quality authentication, and filing of charity sale articles are the premise, basis and guarantee for the implementation of a pledge-payable two-way multilateral guarantee agreement.

The currency purchasing member can apply to the pledge-payable electronic currency consignee (7) for the issuance of a pledge-payable right note recording the pledge-payable electronic currency. The pledge-payable right note records: 1, a certain type and amount of pledge-payable electronic currency equivalent to the actual deposit fee of the registered member; 2, a commitment to conditional redemption payment on due date; 3, a pledge-payable trading guarantee or counter guarantee provided by the registered member to the pledge-payable platform with the actual deposit fee equivalent to the bought pledge-payable electronic currency as a security deposit; and 4, a pledge-payable trading counter guarantee or guarantee provided by the pledge-payable platform for the currency purchasing member with the actually charged fee equivalent to the sold pledge-payable electronic currency as a security deposit.

103. The seller member logs in to the store management module (33)/charity store management module (63) of the member side pledge-payable system (3/6) by using the member side electronic device (1/4), accesses the store/charity store, values the goods/charity sale articles in flat money, for example, in RMB, and prices the goods/charity sale articles in pledge-payable electronic currency according to a certain exchange rate of flat money to pledge-payable electronic currency; the buyer member logs in to the charity store management module (63)/store management module (33) of the member side pledge-payable system (6/3) by using the member side electronic device (4/1), accesses the store/charity store of the seller member, and selects the goods if a trading mode of payment before delivery is chosen, or signs for the goods if a trading mode of payment on delivery is chosen.

### Step 2: Prompt of pledgeable payment

201. The buyer member logs in to the pledge-payable management module (62/32) of the member side pledge-payable system (6/3) by using the member side electronic device (4/1), and issues a pledge-payable command to the pledge-payable platform (7) to prompt pledgeable payment.

If the buyer member chooses redemption pledgeable payment, upon the prompt of pledgeable payment, a pledge-payable warrant recording the pledge-payable electronic currency is issued and delivered to the pledge-payable electronic currency redeemer (7) to prompt redemption.

If the buyer member chooses partial pledgeable payment, the buyer member applies to the pledge-payable electronic currency consignee (7) for the issuance of a pledge-payable sub right note before the pledge-payable warrant is issued; if the buyer member chooses partial trans-pledge payment, the buyer member applies to the pledge-payable electronic currency consignee (7) for the issuance of a pledge-payable sub-warrant before the pledge-payable warrant is issued; if the pledge-payable warrant does not record "transferable pledge payment", the trans-pledge payment is forbidden; if the buyer member chooses electronic cash payment, the pledge-payable platform (7) provides the member with an online trading payment system switching service to automatically switch to a corresponding bank payment system.

The pledge-payable warrant records: 1, a certain type and amount of pledge-payable electronic currency equivalent to all or part of the payment for goods; 2, a pledge-payable voucher for redemption payment; and 3, a commitment or entrust for conditional redemption payment on due date within a prescribed period for complying presentation. The pledge-payable electronic currency consignee (7) can divide, according to the application of the currency purchasing member, the pledge-payable right note of the currency purchasing member who is a right holder into a plurality of pledge-payable sub right notes. The pledge-payable electronic currency redeemer (7) can divide, according to the application of the currency collecting member, the pledge-payable warrant of the currency collecting member who is a pledge-payable right holder into a plurality of pledge-payable sub-warrants; the pledge-payable warrant recording "transferable pledge payment" is deemed to authorize a pledge-payable redeemer to issue a pledge-payable sub-warrant by using the pledge-payable warrant as a parent warrant according to the application of the pledge-payable right holder; and the pledge-payable sub-warrant shall not destroy the integrity of the pledge-payable bill to which the pledge-payable warrant belongs.

202. The pledge-payable platform (7) verifies the prompt of pledgeable payment after receiving the pledge-payable command, that is, verifies the pledge-payable ability and pledge-payable permission of the buyer member, and retrieves the pledge-payable electronic currency of the buyer member, or/and whether the pledge-payable credit limit is sufficient, and whether the pledge-payable permission of the buyer member is sufficient; if the pledge-payable electronic currency of the buyer member is insufficient and the pledge-payable credit limit is insufficient, or if the pledge-payable permission of the buyer member is insufficient, the verification is not passed, the execution is rejected and the reason is reported; otherwise, the verification is passed; if the buyer member submits the pledge-payable warrant to prompt redemption, the pledge-payable verification is prompted; the pledge-payable verification further includes pledge-payable warrant verification, that is, the redeemer (7) verifies the received pledge-payable warrant after the pledge-payable ability and pledge-payable permission verification is passed.

After the verification is passed, a pledge-payable redemption record number, and/or a pledge-payable command record number, and a temporary password and validity period used to execute pledgeable payment, are fed back to the primary communication device (51/21) and the standby communication device (52/22) of the buyer member; if the buyer member submits the pledge-payable warrant to prompt redemption, after the verification is passed, the redeemer further needs to undertake the redemption within a time limit, and returns the pledge-payable warrant recording "redemption" to the buyer member.

At the same time, the primary communication device and the standby communication device are activated, so that the registered member can verify the pledge-payable communication information received by the primary communication device through the standby communication device, and receive information change reminders and confirm change information through the standby communication device when the member registration information or the information bound to the pledge-payable account changes, where the change information which is not confirmed by the standby communication device is invalid; and when the standby communication device is used as a primary communication device, the previous primary communication device is regarded as a standby communication device.

### Step 3: Execution of pledgeable payment

301, The buyer member logs in to the pledge-payable management module (62/32) of the member side pledge-payable system (6/3) by using the member side electronic device (4/1), and issues a command of executing pledgeable payment to the pledge-payable platform (7), and pays pledge-payable electronic currency to a designated pledge-payable account of the seller member for pledge-payable consumption, payment, donation or transfer.

The buyer member choosing warrant pledgeable payment further needs to deliver a pledge-payable warrant to the seller member, where the buyer member choosing quick pledgeable payment needs to issue and deliver the pledge-payable warrant to the seller member, and the buyer member choosing redemption pledgeable payment needs to deliver a redemption pledge-payable warrant to the seller member.

The buyer member choosing self-redemption pledgeable payment may issue and deliver the pledge-payable warrant to the seller member when delivering the pledge-payable electronic currency to the seller member by referring to the quick pledgeable payment, and make a commitment to conditional redemption payment on due date.

302. After receiving the command of executing pledgeable payment, the pledge-payable platform (7) executes pledgeable payment verification, and retrieves whether the pledge-payable account of the buyer member has a pledge-payable redemption record corresponding to the pledge-payable electronic currency, and/or a pledge-payable command record.

After the verification is passed, the pledge-payable electronic currency is transferred to the pledge-payable account of the seller member according to the retrieved corresponding pledge-payable redemption record and/or pledge-payable command record, where for the seller member who accepts quick pledgeable payment (including currency-only pledgeable payment), the pledge-payable electronic currency is transferred to the pledge-payable account of the seller member according to the retrieved corresponding pledge-payable command record; for the seller member who accepts redemption pledgeable payment, the pledge-payable electronic currency is transferred to the pledge-payable account of the seller member according to the retrieved corresponding pledge-payable redemption record and pledge-payable command record.

303. The seller member collects the pledge-payable electronic currency; when the seller member uses the member electronic device (1/4) to log in to the pledge-payable management module (32/62) of the member side pledge-payable system (3/6) to collect the pledge-payable electronic currency, the pledge-payable periodic redemption payment sub-module (322/622/822) is triggered, and the pledge-payable periodic redemption payment procedure is initiated; since the collection of the pledge-payable electronic currency by the seller member, the seller member side electronic device (1), the buyer member side electronic device (4) and the pledge-payable platform (7) synchronously activate pledge-payable periodic redemption payment countdown; before the pledge-payable periodic redemption payment countdown is over, the system refuses to make redemption payment; and after the pledge-payable periodic redemption payment countdown is over, the system approves to make redemption payment.

Activating the pledge-payable periodic redemption payment procedure and synchronously activating the pledge-payable periodic redemption payment countdown can prolong the time for withdrawing stolen electronic property and win time to avoid actual loss of the electronic property.

If the seller member accepts the warrant pledgeable payment, the seller member verifies the received pledge-payable warrant after collecting the pledge-payable electronic currency, signs for the pledge-payable warrant after the pledge-payable warrant verification is passed, and feeds back a pledge-payable warrant signing record number to the buyer member; and when the seller member signs for the pledge-payable warrant, the pledge-payable periodic redemption payment sub-module is triggered, and the pledge-payable periodic redemption payment countdown is synchronously started since the signing for the pledge-payable warrant by the seller member.

If the buyer member choosing warrant pledgeable payment does not deliver the pledge-payable warrant within the prescribed period after delivering the pledge-payable electronic currency, or if the seller member accepting warrant pledgeable payment does not sign for the pledge-payable warrant within the prescribed period after collecting the pledge-payable electronic currency, the pledge-payable electronic currency that has been collected by the seller member is automatically returned to the pledge-payable account of the buyer member after the prescribed period expires; if the seller member accepting warrant pledgeable payment does not sign for the pledge-payable warrant, the pledge-payable periodic redemption payment countdown is not activated; and if the pledge-payable electronic currency collected by the seller member for the first time is returned for some reason, the pledge-payable two-way multilateral guarantee agreement signed by the seller member continues to be valid.

The seller member uses the member electronic device (1/4) to log in to the pledge-payable management module (32/62) of the member side pledge-payable system (3/6), triggers the pledge-payable two-way multilateral guarantee agreement sub-module (321/621/821) when collecting the pledge-payable electronic currency for the first time, activates the pledge-payable two-way multilateral guarantee agreement signing procedure, and signs a pledge-payable two-way multilateral guarantee agreement. By signing the pledge-payable two-way multilateral guarantee agreement, the seller member will provide a pledge-payable trading guarantee or counter guarantee to the pledge-payable platform with the actual payment for goods equivalent to the collected pledge-payable electronic currency as a security deposit since the collection of the bought or collected pledge-payable electronic currency delivered by the buyer member or since the singing for the pledge-payable warrant delivered by the buyer member, and also obtain a pledge-payable trading counter guarantee or guarantee provided by the pledge-payable platform since the redemption with the actually charged fee equivalent to the pledge-payable electronic currency as a security deposit; that is, the seller member confirms, since the collection of the bought or collected pledge-payable electronic currency delivered by the buyer member or since the singing for the pledge-payable warrant delivered by the buyer member, that the rights and obligations of pledge-payable trading guarantee or counter guarantee set based on the pledge-payable electronic currency and set for the buyer member are transferred to the seller member together; and the system approves to collect the pledge-payable electronic currency if the seller member signs the agreement, or refuses to collect the pledge-payable electronic currency if the seller member does not sign the agreement.

If the seller member has signed the pledge-payable two-way multilateral guarantee agreement at registration, when the seller member collects the pledge-payable electronic currency for the first time, the system automatically identifies and approves the collection of pledge-payable electronic currency.

### Step 4: Conditional redemption payment on due date

401. After the periodic redemption payment countdown is over, the seller member uses the member side electronic device (1/4) to log in to the pledge-payable management module (32/62) of the member side pledge-payable system (3/6), and submits a pledge-payable self-discipline certificate, a pledge-payable inflow record, and an application for pledge-payable redemption payment on due date, and the like to the redeemer (7), to prompt redemption payment.

If the seller member accepts the warrant pledgeable payment, the seller member can submit, after the periodic redemption payment countdown is over and within the delivery period of the pledge-payable warrant, the pledge-payable self-discipline certificate, the pledge-payable warrant, pledge-payable complying presentation documents, the application for pledge-payable redemption payment on due date, and the like to the redeemer (7) to prompt redemption payment. If the seller member does not perform pledge-payable self-discipline identification or does not gain the pledge-payable self-discipline certificate, the system refuses to prompt redemption payment.

If the pledge-payable electronic currency bought by the registered member is not used in the pledge-payable trading, the registered member can apply to, after the validity period of the pledge-payable electronic currency expires, the consignee (7) for handling a due redemption payment procedure for the bought pledge-payable electronic currency by referring to the quick pledgeable payment (including currency-only pledgeable payment).

If the pledge-payable electronic currency which is reported lost by the loss report member is declared invalid, the loss report member can apply to, after the lost pledge-payable electronic currency is declared invalid, the pledge-payable platform (7) for handling a withdrawal procedure for the lost pledge-payable electronic currency by referring to the warrant pledgeable payment.

If the seller member accepts the self-redemption pledgeable payment, the seller member can apply to the buyer member side electronic device (4/1) for handling a due pledge-payable redemption payment procedure by referring to the warrant pledgeable payment; and the self-redemption member can apply to, after redemption payment is finished, the consignee (7) for handling a due redemption payment procedure for the self-redemption pledge-payable electronic currency by referring to the warrant pledgeable payment.

If the pledge-payable warrant received by the seller member records "negotiable redemption payment", the seller member can apply to the redeemer (7) for early pledge-payable redemption payment within the delivery period of the pledge-payable warrant, where the negotiable redemption payment refers to a pledge-payable action that the redeemer performs pledge-payable redemption payment verification on the negotiable redemption pledge-payable warrant submitted by the seller member within the delivery period of the pledge-payable warrant, and makes redemption payment prior to the due date after the verification is passed; and if the pledge-payable warrant does not record "negotiable redemption payment", the negotiable redemption payment cannot be handled.

402. After receiving the prompt of redemption payment, the redeemer (7) verifies the pledge-payable redemption payment, and retrieves whether the pledge-payable account of the seller member has a pledge-payable command record corresponding to the pledge-payable electronic currency; if the pledge-payable account does not have the pledge-payable command record, the verification is not passed, the redeemer refuses redemption payment and feeds back the reason; if the pledge-payable account has the pledge-payable command record, the verification is passed, and the redeemer deducts, according to the corresponding pledge-payable command record retrieved from the pledge-payable account of the seller member, equivalent pledge-payable electronic currency from the pledge-payable account of the seller member through the pledge-payable system on the due date, and then makes equivalent redemption payment to the bank account of the seller member through the bank payment system to complete the pledge-payable redemption payment.

If the seller member submits the pledge-payable warrant to prompt redemption payment, the pledge-payable redemption payment is verified, where the verification further includes pledge-payable warrant verification, and the pledge-payable redemption payment verification result should be confirmed by both members; after the verification is passed, redemption payment is made on due date according to the pledge-payable redemption payment verification result confirmed by both members, the corresponding pledge-payable redemption record retrieved from the pledge-payable account of the seller member, and/or the pledge-payable warrant signing record, and the pledge-payable command record.

If the buyer member fails to confirm, refuses to confirm, or raises objections to the pledge-payable redemption payment verification result, the redemption payment will be refused, and a reason for refusing the redemption payment is notified in writing to the seller member; and the buyer member's objections to the goods or the pledge-payable vouchers not recorded by the pledge-payable warrant shall not be regarded as the objections to the pledge-payable redemption payment verification result.

In the implementation of three-party independent verification and buyer member's one-vote veto against the warrant pledgeable redemption payment, the buyer member is designed as a pledge-payable goalkeeper, which can further prevent the risk of pledgeable payment.

403. The pledgeable payment is finished after the seller member receives the redemption payment; once the pledge-payable electronic currency is redeemed, various pledge-payable rights and obligations set based on the pledge-payable electronic currency between the pledge-payable platform and the currency purchasing member, between the currency purchasing member (buyer member) and the currency collecting member (seller member), between the currency collecting member and the pledge-payable platform and between each other are terminated.

The above drawings and text descriptions are only embodiments of the present invention, which are intended to help understand the essential spirit, basic principle and core idea of the pledgeable payment of the present invention, and should not be construed as limiting the present invention. Any amendment, substitution, improvement, combination, simplification and modification made by those of ordinary skill in the art to the specific implementation mode and application scope of the present invention without departing from the essential spirit, basic principle and core idea of the present invention shall be regarded as equivalent replacements, and fall into the protection scope of the present invention.

## Claims

1. A payment method for pledge-payable online trading, comprising:
step 1: preparation of pledgeable payment
101, opening a pledge-payable account in a database of a pledge-payable platform, and binding the pledge-payable account to a member side electronic device and a member communication device;
102, purchasing pledge-payable electronic currency from the pledge-payable platform to top up the pledge-payable account after the pledge-payable account is opened;
103, valuing, by a seller member, goods in flat money and pricing the goods in pledge-payable electronic currency; and selecting, by a buyer member, the goods if a trading mode of payment before delivery is chosen, or signing, by the buyer member, for the goods if a trading mode of payment on delivery is chosen;
step 2: prompt of pledgeable payment
201, issuing, by the buyer member, a pledge-payable command to the pledge-payable platform to prompt pledgeable payment;
wherein if the buyer member chooses redemption pledgeable payment, when a prompt for pledgeable payment is given, a pledge-payable warrant recording the pledge-payable electronic currency is issued and delivered to a redeemer to prompt redemption;
202, verifying, by the pledge-payable platform after receiving the pledge-payable command, the prompt of pledgeable payment, and retrieving the pledge-payable electronic currency of the buyer member, or/and whether the pledge-payable credit limit is sufficient, and whether the pledge-payable permission of the buyer member is sufficient; if the buyer member submits the pledge-payable warrant to prompt redemption, prompting the pledge-payable verification, wherein the pledge-payable verification further comprises pledge-payable warrant verification;
after the verification is passed, a pledge-payable redemption record number, and/or a pledge-payable command record number, and a temporary password and validity period used to execute pledgeable payment, are fed back to the buyer member; if the buyer member submits the pledge-payable warrant to prompt redemption, after the verification is passed, the pledge-payable platform further needs to undertake the redemption within a time limit, and returns the pledge-payable warrant recording "redemption" to the buyer member;
step 3: execution of pledgeable payment
301, issuing, by the buyer member, a command of executing pledgeable payment to the pledge-payable platform, and paying the pledge-payable electronic currency to a designated pledge-payable account of the seller member for pledge-payable consumption, payment, donation or transfer;
wherein the buyer member choosing warrant pledgeable payment further needs to deliver the pledge-payable warrant recording the pledge-payable electronic currency to the seller member;
302, executing, by the pledge-payable platform after receiving the command of executing pledgeable payment, the pledgeable payment verification, and retrieving whether the pledge-payable account of the buyer member has a pledge-payable redemption record corresponding to the pledge-payable electronic currency, and/or a pledge-payable command record;
wherein after the verification is passed, the pledge-payable electronic currency is transferred to the pledge-payable account of the seller member according to the retrieved corresponding pledge-payable redemption record and/or pledge-payable command record;
303, collecting, by the seller member, the pledge-payable electronic currency;
if the seller member accepts the warrant pledgeable payment, verifying the received pledge-payable warrant after collecting the pledge-payable electronic currency, signing for the pledge-payable warrant after the pledge-payable warrant verification is passed, and feeding back a pledge-payable warrant signing record number to the buyer member;
step 4: conditional redemption payment on due date
401, submitting, by the seller member, a pledge-payable inflow record and the like to the redeemer to prompt redemption payment;
if the seller member accepts the warrant pledgeable payment, submitting the pledge-payable warrant and the like to the redeemer to prompt redemption payment;
402, verifying, by the redeemer, the pledge-payable redemption payment after receiving the prompt for redemption payment; and if the seller member submits the pledge-payable warrant to prompt redemption payment, verifying the pledge-payable redemption payment, wherein the verification further comprises pledge-payable warrant verification, and the pledge-payable redemption payment verification result should be confirmed by both members;
after the verification is passed, redemption payment is made on due date according to the pledge-payable redemption payment verification result confirmed by both members, the pledge-payable redemption record and/or the pledge-payable warrant signing record, and/or the pledge-payable command record;
403, finishing pledgeable payment after the seller member receives the redemption payment, wherein once the pledge-payable electronic currency is redeemed, various pledge-payable rights and obligations set based on the pledge-payable electronic currency between the pledge-payable platform and the currency purchasing member, between the currency purchasing member (buyer member) and the currency collecting member (seller member), between the currency collecting member and the pledge-payable platform and between each other are terminated.

2. The payment method for pledge-payable online trading according to claim 1, wherein the pledge-payable, namely pledgeable payment, is a novel online trading payment mode that uses pledge-payable electronic currency with a pledge payment function and a two-way multilateral guarantee function as a pledge payment object to pay for goods by pledge, and is also referred to as a pledge guaranteed payment or guaranteed payment; the pledge-payable electronic currency is a digital product that a pledge-payable platform provider targeted sells through the pledge-payable platform for pledge payment to a registered member who provides a pledge-payable trading guarantee or counter guarantee by taking the actual deposit fee as a guarantee fee, and promises to provide a pledge-payable trading counter guarantee or guarantee by taking the actually charged fee as a guarantee fee and make conditional redemption payment on due date; and the pledge-payable electronic currency is a pledge payment object in an electronic form, and mainly has the following characteristics: 1, pledge payment; 2, two-way multilateral guarantee; 3, diversity of a pledge-payable subject and uniqueness of a redemption payment subject; and 4, Internet+, law+;
the buyer member needs to deliver pledge-payable electronic currency equivalent to the payment for goods to the seller member when performing pledgeable payment, and can issue a pledge-payable warrant recording the pledge-payable electronic currency; the pledge-payable warrant is issued by the buyer member relying on the pledge-payable system, with all or part of the bought or collected pledge-payable electronic currency as a pledge payment object, takes the seller member as a pledge-payable obligee, and records pledge-payable electronic currency equivalent to all or part of the payment for goods, a pledge-payable voucher for redemption payment, and a pledge-payable document of title for entrusting or promising conditional redemption payment on due.

3. The payment method for pledge-payable online trading according to claim 1, wherein the registered member who conducts pledgeable payment needs to buy pledge-payable electronic currency from a pledge-payable electronic currency consignee, and apply for the issuance of a pledge-payable right note recording the pledge-payable electronic currency; the pledge-payable right note is issued by the pledge-payable electronic currency consignee relying on the pledge-payable system for pledge payment, is a pledge-payable document of title that takes the currency purchasing member as an obligee, records the pledge-payable electronic currency and a commitment to conditional redemption payment on due, and is also a pledge-payable counter guarantee slip or a pledge-payable guarantee slip that the pledge-payable platform provides a pledge-payable trading counter guarantee or guarantee to the currency purchasing member with the actually charged fee equivalent to the sold pledge-payable electronic currency as a security deposit;
according to the allowed chargeable business scope of the pledge-payable platform provider, the pledge-payable right note may also be a pledge-payable insurance policy, a pledge-payable deposit slip, a pledge-payable draft, a pledge-payable promissory note, a pledge-payable check or a pledge-payable letter of credit, a pledge-payable debenture, a pledge-payable held debenture, a pledge-payable stock certificate or pledge-payable stocks, a pledge-payable held stock certificate or pledge-payable held stocks, a pledge-payable fund share warrant, a pledge-payable accounts receivable warrant, a pledge-payable order, a pledge-payable warehouse warrant or a pledge-payable bill of lading, and the like.

4. The payment method for pledge-payable online trading according to claim 1, wherein when the registered member buys or collects the pledge-payable electronic currency for the first time, a pledge-payable two-way multilateral guarantee agreement sub-module is triggered, a pledge-payable two-way multilateral guarantee agreement signing procedure is initiated, and a pledge-payable two-way multilateral guarantee agreement is signed; by signing the pledge-payable two-way multilateral guarantee agreement, the currency purchasing member provides a pledge-payable trading guarantee or counter guarantee to the pledge-payable platform with the actual deposit fee equivalent to the bought pledge-payable electronic currency as a security deposit since the buying of the pledge-payable electronic currency or since the singing for the pledge-payable right note, and also obtains a pledge-payable trading counter guarantee or guarantee provided by the pledge-payable platform since the redemption with the actually charged fee equivalent to the sold pledge-payable electronic currency as a security deposit; the currency collecting member (seller member) confirms, since the collection of the bought or collected pledge-payable electronic currency delivered by the buyer member or since the singing for the pledge-payable warrant delivered by the buyer member, that the rights and obligations of pledge-payable trading guarantee or counter guarantee set based on the pledge-payable electronic currency and set for the buyer member are transferred to the currency collecting member (seller member) together; and
before the redemption payment of the redeemer, the registered member has the obligation to guarantee redemption and guarantee redemption payment for the used pledge-payable electronic currency and the bought or/and collected pledge-payable electronic currency under the agreement of trans-pledge payment or negotiable redemption payment.

5. The payment method for pledge-payable online trading according to claim 1, wherein the pledge-payable warrant verification comprises pledge-payable continuous verification and pledge-payable complying presentation verification; when the seller member or the redeemer receives the pledge-payable warrant, a pledge-payable continuous verification sub-module is triggered, a pledge-payable continuous verification procedure is initiated, and the continuity and/or authenticity of electronic signatures of the pledge-payable warrant and the attached pledge-payable note are verified through the system; if the pledge-payable electronic signatures are untrue or discontinuous, the verification is not passed, and the system directly refuses to receive the pledge-payable warrant, or directly refuses to redeem or refuses redemption payment; if the pledge-payable electronic signatures are continuous and/or true, the verification is passed, and the system prompts the seller member or the redeemer for pledge-payable complying presentation verification;
the seller member or the redeemer performs the pledge-payable complying presentation verification according to the prompt of the system; if the presented documents are found to be discrepant, the discrepancies are notified at one time within a time limit and corrections within the time limit are required; if the discrepancies are not corrected within the time limit, the verification is not passed, the seller member refuses to accept the pledge-payable warrant, and the redeemer refuses to redeem or refuses redemption payment; or if the presented documents are correct, the verification is passed.

6. The payment method for pledge-payable online trading according to claim 1, wherein when the seller member collects the pledge-payable electronic currency, a pledge-payable periodic redemption payment sub-module is triggered, a pledge-payable periodic redemption payment procedure is initiated, and since the collection of the pledge-payable electronic currency by the seller member, a seller member side electronic device, a buyer member side electronic device and the pledge-payable platform synchronously start pledge-payable periodic redemption payment countdown; and
if the seller member accepts the warrant pledgeable payment, when the seller member signs for the pledge-payable warrant, the pledge-payable periodic redemption payment sub-module is triggered, and the pledge-payable periodic redemption payment countdown is synchronously started since the signing for the pledge-payable warrant by the seller member.

7. A payment system for pledge-payable online trading, comprising a seller member side electronic device, a seller member communication device, a seller member side pledge-payable system, a buyer member side electronic device, a buyer member communication device, a buyer member side pledge-payable system, a pledge-payable platform, and a pledge-payable platform side pledge-payable system, which are connected by means of interconnection networks, such as the Internet; wherein the member side electronic device is installed with the member side pledge-payable system, and the member side pledge-payable system comprises: a member management module, configured to carry out real-name registration and authentication of members, open member permissions, and maintain and verify member identification information; a pledge-payable management module, configured to open a pledge-payable account, deposit, receive and pay pledge-payable electronic currency, verify the pledge-payable electronic currency and member's pledge-payable identification information, and record pledge-payable account flow information, and further configured to cut off the path for stealing electronic cash; a store management module/charity store management module, configured for a seller member to carry out real-name authentication of a store, authenticate the quality of goods, file charity sale articles, manage and maintain the store and goods, and accept or place a pledge-payable order or a pledge-payable charity sale order, or for a buyer member to file charity sale articles, manage and maintain the charity sale articles, place a pledge-payable order, and accept or place a pledge-payable charity sale order;
the member communication device comprises: a primary communication device and a standby communication device, and is configured to communicate with the pledge-payable platform for member identification information verification, and the standby communication device is further configured to receive information change reminders and confirm change information when the member registration information or the information bound to the pledge-payable account changes;
the pledge-payable platform is installed with the pledge-payable platform side pledge-payable system, and the pledge-payable platform side pledge-payable system comprises: a member management module, configured to carry out real-name registration and authentication of members, open member permissions, maintain member information, provide verification, supervision and service, and save and verify member identification information; a pledge-payable management module, configured to issue, sell, clear, settle and redeem pledge-payable electronic currency, save and verify the pledge-payable electronic currency and member's pledge-payable identification information, and record pledge-payable account flow information, and further configured to cut off the path for stealing electronic cash; and a store management module (charity store management module), configured to carry out real-name authentication of a store, authenticate the quality of goods, file charity sale articles, manage and maintain the store and goods, provide verification, supervision and service for the pledge-payable order or pledge-payable charity sale order, and save and update the store and goods information.

8. The payment system for pledge-payable online trading according to claim 7, wherein the pledge-payable management module further comprises: a pledge-payable two-way multilateral guarantee agreement sub-module, configured to initiate a pledge-payable two-way multilateral guarantee agreement signing procedure for signing a pledge-payable two-way multilateral guarantee agreement.

9. The payment system for pledge-payable online trading according to claim 7, wherein the pledge-payable management module further comprises: a pledge-payable continuous verification sub-module, configured to initiate a pledge-payable electronic signature verification procedure for verifying the continuity and/or authenticity of a pledge-payable electronic signature, and further configured to cut off the path for consuming stolen electronic property.

10. The payment system for pledge-payable online trading according to claim 7, wherein the pledge-payable management module further comprises: a pledge-payable periodic redemption payment sub-module, configured to initiate a pledge-payable periodic redemption payment procedure, and simultaneously start pledge-payable redemption payment countdown, and further configured to prolong the time for withdrawing the stolen electronic property.
